# EUROPEAN PATENT SPECIFICATION

(11) **EP 2 009 840 B1**
(45) Date of publication and mention of the grant of the patent: **27.05.2015**
(21) Application number: 07710989.0
(22) Date of filing: 15.02.2007
(51) Int. Cl.: H04L 12/14, H04W 84/08, H04W 12/12, H04M 15/00, H04W 4/10, H04W 4/24, H04W 76/00

(54) **AN ACCOUNTING METHOD, APPARATUS AND SYSTEM BASED ON ROLES IN THE BUSINESS OF PUSH-TO-TALK OVER CELLULAR**
BUCHHALTUNGSVERFAHREN, VORRICHTUNG UND SYSTEM AUF DER BASIS VON ROLLEN AUF DEM GESCHÄFTSGEBIET DES PUSH-TO-TALK OVER CELLULAR
PROCÉDÉ, DISPOSITIF ET SYSTÈME DE COMPTABILITÉ FONDÉS SUR DES RÔLES DANS LE COMMERCE DE MESSAGERIE VOCALE INSTANTANÉE SUR CELLULAIRE

(30) Priority: 28.04.2006 CN 200610078965
(43) Date of publication of application: 31.12.2008
(73) Proprietor: Huawei Technologies Co., Ltd., Longgang District Shenzhen, Guangdong 518129 (CN)
(72) Inventor: ZHAO, Dong, Guangdong 518129 (CN); ZHANG, Aiqin, Guangdong 518129 (CN)
(74) Representative: Thun, Clemens
(86) International application number: PCT/CN2007/000571
(87) International publication number: WO 2007/124644

(56) References cited:
- EP-A1- 1 641 201
- WO-A1-2004/036825
- WO-A1-2004/107725
- WO-A1-2005/117344
- CN-A- 1 440 158
- CN-A- 1 444 824
- CN-A- 1 585 519
- US-A1- 2005 240 520

## Description

### FIELD OF THE INVENTION

The present invention relates to the charging technology in the communication field, and in particular, to a method, a system and an apparatus for performing role-based charging for Push to Talk over Cellular (PoC) services.

### BACKGROUND

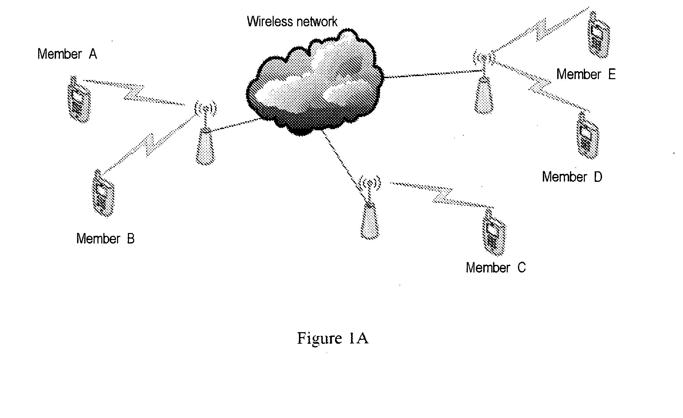

The PoC service is a cluster media communication service based on the IP technology. It is implemented through a half-duplex Voice over IP (VoIP) technology. After a name list of a group is set, a PoC user can make calls with another PoC user in point-to-point and point-to-multipoint half-duplex mode. Figure 1A shows a PoC service system in the prior art.

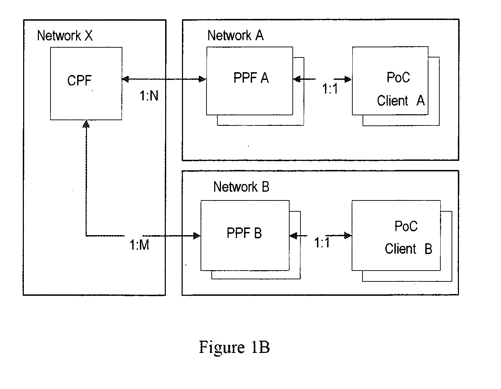

The relationships between the entities involved in PoC communication are shown in Figure 1B, in which the Controlling PoC Function (CPF) is a core of the communication. A CPF is adapted to perform centralized control and implement the functions such as session control (for example, setting up or cancelling a session, performing signaling and media negotiation, processing requests, distributing media streams), group policy execution (including QoS collection and control) and user plane adaptation. Each client corresponds to a Participate PoC Function (PPF) entity. Each PPF performs session operation by sending a request to the CPF, and the CPF negotiates and controls the session process (for example, media distribution, data transfer, transfer of rights and roles, and QoE authentication). The communications between the clients that join a session are carried out as follows: a PPF sends a CPF request and receives the CPF instruction; the CPF distributes media and data to the PPF according to the policies; afterward, each PPF forwards the media and data to the corresponding client connected, thus accomplishing point-to-point or point-to-multipoint communication between clients.

As function modules, the CPF and the PPF may exist on the same PoC server or on different PoC servers. A client is a function entity for adding a user into a session; role is one of the attributes of a PoC user; and multiple PoC users can make up a PoC group. In the current practice, roles of PoC users include: regular PoC participant, PoC dispatcher, PoC moderator, and fleet member. More roles may be created in the future.

The charging for a PoC service is specifically charging for the PPF and the CPF respectively, and is categorized into offline charging and online charging. An offline charging module is called Count Data Function (CDF) and an online charging module is called Online Charging System (OCS).

The corresponding charging request and charging operation are triggered if an event is generated by a PPF or a CPF due to a PoC operation or a session is set up, updated or completed.

The brief process of charging for PoC services is as follows:
the charged object triggers a charging request due to occurrence of an event;
the request carries the required data parameters and is sent to the charging module (CDF or OCS);
the charging module performs charging according to the parameters, which will affect the account data of the user;
the charging module returns an operation result to the charged object upon completion of the charging.

In the research and development process, the inventor finds that the prior art is unable to perform role-based charging.

WO 20051173441 A1 discloses a system for controlling communication between user terminals using a telecommunications network. The invention provides an interface between a real-time charging control system for controlling usage of network resources during such usage and a group communications control node which is capable of controlling group communications sessions. Improved real-time charging control mechanisms can be implemented to account for usage of group communications services, for example where charging for an entire group communications session may be applied to a selected single party. Charging for a group communications session may be conducted with the flexibility of being able to charge according to the number of participants without having to transmit separate charging control signals from each participant's leg of the session to the real-time charging control system, thus reducing the signaling load in the network.

### SUMMARY

The present invention provides a method, a system and an apparatus for performing role-based charging for PoC services, so as to perform differentiated charging operations specific to each role.

An embodiment of the present invention provides a method for performing role-based charging for Push to Talk over Cellular, PoC, services, including:
receiving, by a Count Data Function, CDF, or an Online Charging System, OCS, a charging request from the PoC server , wherein the charging request carries information on a user role; and
selecting, by the CDF or OCS, a charging policy with reference to information on a user role after receiving the request, performing charging according to the selected charging policy, and returning a charging response to the PoC server; wherein the user role comprises at least one of regular PoC participant, PoC dispatcher, PoC moderator and fleet member.

An embodiment of the present invention provides a Push to Talk over Cellular, PoC, server, including:
a module, adapted to obtain information on a user role; a module, adapted to send a charging request carrying the information on a user role to a Count Data Function, CDF, or an Online Charging System, OCS; and a module, adapted to receive a charging response, wherein the charging response carries a charging result, and the charging result is derived after a charging procedure is performed according to a charging policy, and the charging policy is selected according to the information on a user role; wherein the user role comprises at least one of regular PoC participant, PoC dispatcher, PoC moderator and fleet member.

An embodiment of the present invention provides an apparatus for performing role-based charging for a Push to Talk over Cellular, PoC, service, comprising: a receiving module, configured to receive a charging request from a PoC server, wherein the charging request carries information on a user role; anda charging module, configured to select a charging policy with reference to information on a user role after receiving the charging request, and perform charging according to the selected charging policy, and a transmitting module, configured to return a charging response to the PoC server; wherein the apparatus is a Count Data Function, CDF, or an Online Charging System, OCS, wherein the user role comprises at least one of regular PoC participant, PoC dispatcher, PoC moderator and fleet member.

An embodiment of the present invention provides a communication system, including:
the PoC server and
the apparatus.

In the embodiments of the present invention, the information on the user role is carried in the charging request, and the charging function entity selects a charging policy according to the information on the user role, thus providing differentiated charging operations specific to each different user role.

### BRIEF DESCRIPTION OF THE DRAWINGS

Figure 1A shows the structure of a PoC service system in the prior art.
Figure 1B shows the relationships between the entities in PoC communication in the prior art.
Figure 2 shows a PoC communication system that performs role-based charging according to an embodiment of the present invention.
Figure 3 shows the charging process of setting up or adding a PoC session based on roles according to an embodiment of the present invention.
Figure 4 shows the relationships between components of a user role according to an embodiment of present invention.
Figure 5 is a flowchart of offline charging according to an embodiment of the present invention.
Figure 6 is a flowchart of online charging according to an embodiment of the present invention.

### DETAILED DESCRIPTION

The operation rights, operation scope and executable operations of a user role are different from those of another user role. Therefore, user roles are taken into account in the charging policy to be executed in an embodiment of the present invention in order to provide differentiated charging.

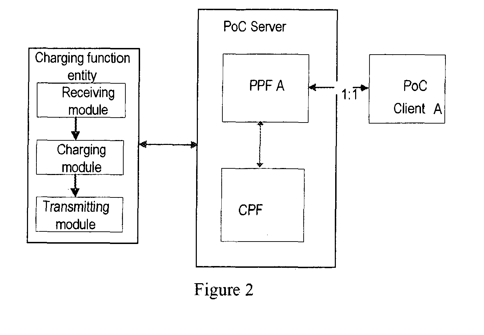

As shown in Figure 2, a Controlling PoC Function (CPF) and a Participate PoC Function (PPF) exist in the same PoC server (or in different PoC servers). The PoC server may trigger the charging operation in the process of setting up, joining, updating or terminating a session, and send a charging request to the charging function entity, with the information on the PoC user role carried in the request. The information on the PoC user role may be part of role information, for example, role identifier, role ID, non-role information related to a role (for example, username, ID), validity period of a role, part or whole of the information in a role-related function identifier, or details of a role. Charging policies specific to different roles are saved in a charging function entity. After receiving a charging request, the charging function entity selects a charging policy with reference to the information on the user role, and performs charging according to the policy. A charging operation is either to charge or not to charge the user.

In this embodiment, the same PoC user may have more than one role (multiple roles must not be mutually exclusive). Each role has different operation rights and is of different levels. A charging function entity executes different charging policies for different roles, and generates the corresponding Charging Data Record (CDR). The features of a role may include a role ID, rights, a role level, operation scope and so on. Such features are related to the charging policy and charging mode. A role and its features may be recorded in any place related to the PoC user, and can be configured and recorded dispersedly. For example, they can be recorded in the group attributes in an XML Document Management Server (XDMS), an operating PoC server or PoC client; when they are saved on a PoC server, they can be stored on the corresponding PPF or on the CPF, or both of them.

A PoC server may obtain the information on the user role in many ways, for example:
A. The PoC server obtains the role information directly from the received SIP INVITE;
B. The PoC server obtains the role information from an external server such as XDMS according to the client user ID or role ID in the SIP INVITE; and
C. The PoC server determines the role for a PoC user with reference to the current conditions and the context information.

The PoC server and the charging function entity shown in Figure 2 are intended to represent meanings of the function rather than quantity of the function. There may be more than one PoC server and more than one charging function entity.

In an embodiment of the present invention, a PPF/CPF includes:
a module, adapted to obtain the information on a user role;
a module, adapted to send a charging request carrying the user role information to the charging function entity; and
a module, adapted to receive charging responses.

In other words, a PPF/CPF can send charging requests to different charging function entities.

In an embodiment of the present invention, a charging function entity includes:
a module, adapted to receive the charging request carrying the information on a user role;
a module, adapted to select a charging policy with reference to the user role information; and
a module, adapted to return a charging response to the charging request sender.

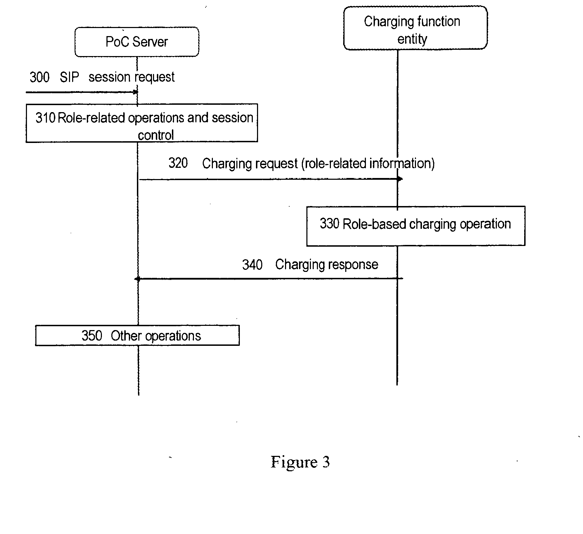

As shown in Figure 3, a charging process includes the steps hereinafter, taking the process that a user role sets up or joins a PoC session as an example.

Step 300: The PoC server receives a SIP INVITE message, which requests to set up or join a PoC session.

The SIP requests may come from different sources. For example, the PoC server receives a request from a PoC client, or from other servers; or the PoC server generates a SIP request as triggered internally according to the current conditions.

Step 310: The PoC server processes the session. The PoC server performs role-related operations according to the role information obtained from the INVITE message (for example, setting up a session type compliant with the role type after the role is identified and authenticated successfully, setting the corresponding attributes), and performs session operations (for example, sending a session invitation to other users). When the invited user agrees to join the session, the "200 OK" response message carries the information related to the role of invited user.

Step 320: The PoC server sends a charging request to the charging function entity, with the information on the user role carried in the request; namely the request is role-related.

Step 330: After receiving the charging request, the charging function entity selects a charging policy with reference to the information on the user role in the request; and begins charging according to the selected charging policy.

When selecting a charging policy, other factors in addition to the role-related information may also be taken into account, for example, current time segment, priority of the user session, validity range of the current rate, current operation environment (such as bearer media type, media change). Such factors and any combination thereof may affect the selection of the charging policy. Therefore, the role-related information is not a unique factor for determining the charging policy. However, the user role needs to be considered in the selection of role-related charging policies.

Charging policies can be customized flexibly as required. For example, a charging policy is to charge according to the role and the time segment, as described below in detail:
user role "A" consumes a service in time segment "a", and the corresponding tariff is "Al";
user role "B" consumes the service in time segment "a", and the corresponding tariff is "Bl";
user role "A" consumes the service in time segment "b", and the corresponding tariff is "free" (or no tariff is selected, and the consumption of the service is treated as free of charge directly).

Step 340: The charging function entity returns a charging response to the PoC server.

Step 350: After the session is set up, other session operations are performed.

In Step 330, a series of operations may be performed. This is because the PoC server may receive the SIP messages fed back by multiple invited users, and each user makes the PPF and the CPF generate the corresponding charging request (moreover, the charging operation of the PPF is slightly different from the charging operation of the CPF, and the CPF performs continuous update operations accordingly).

The charging operations in the session update process and the session termination process are theoretically identical with the previous Step 320 to Step 340.

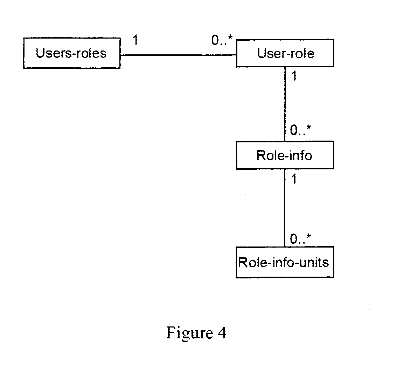

In a charging request message, the information on a user role is carried in a role information structure that can denote multiple users and multiple roles. In an embodiment of the present invention, the format of the user role information structure is [users-roles]. One user role information structure represents multiple users, each user has multiple roles, and each role has multiple relevant information fields. Figure 4 shows the detailed relationships between information structures, wherein:
A. A [users-roles] structure is a user role information structure, and consists of at least one [user-role] entry. A [users-roles] structure consists of 0 [user-role] entry in this circumstance:
   when a session owner initiates a session of the chat type but the session owner himself does not join the session and no other user has joined the session yet, the role information structure recorded by the CPF contains no [user-role] entry.
B. Each [user-role] field may include at least one [role-info] entry. The [user-role] field is empty if a user role in a session has no role or the policy requires ignoring the role information.
C. A [role-info] field consists of at least one [role-info] unit. This field varies with the role, and its contents may be extended according to the role. For example, the extended contents may be operations and rights of a role, the scope and validity period of the role. A [role-info] field consists of 0 [role-info] unit in this circumstance: the user has a role, but the role is the default information or the policy requires ignoring the role information. In this case, no [role-info] field is required.

Figure 4 describes the relationships between the components of a role, which are illustrative only and are not intended to restrict the applications of the present invention. The [user-role] and the [role-info] may be expressed implicitly or explicitly. The explicit mode is: Each described data unit explicitly declares and denotes the relationships between the data units. The implicit mode is: The relationships described in A, B and C above are expressed in a non-explicit mode (for example, a mode like a datasheet), without being expressed through a separate data structure such as [user-role] and/or [role-info].

The charging function request generated by a CPF is different from that generated by a PPF. Therefore, the operation performed by the charging function entity varies accordingly:
1. For a CPF, the [Users-Roles] structure stores the role information of all participants of the session controlled by the CPF. With participation of more users, the information group is updated continuously. In this circumstance, a mechanism requests the charging function to create a partial CDR (which will be merged later). The partial CDR is adapted to record the change of the information group and the impact on the charging policy caused by such change.
2. For a PPF, the [users-roles] structure stores the user information. When the PPF sets up or joins a session, the charging function keeps record of the user role information in the CDR, without the need of updating the user information.

In this embodiment, charging may be offline charging or online charging. Online charging is implemented by a Session-based Charging with Unit Reservation (SCUR) or an Event-based Charging with Unit Reservation (ECUR).

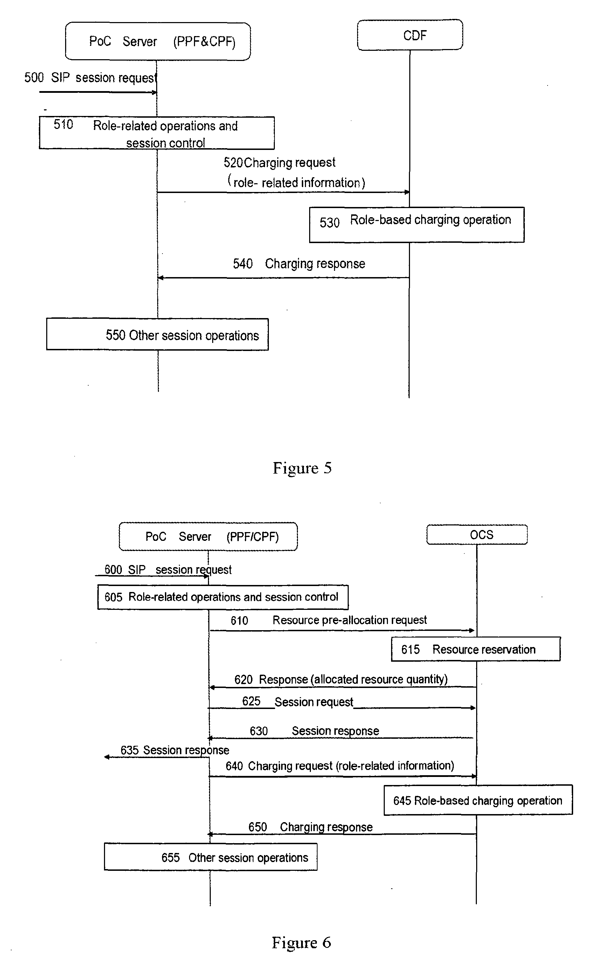

As shown in Figure 5, an offline charging process includes the steps below, taking the process that a user role sets up or joins a PoC session as an example.

Step 500: The PoC server receives a SIP INVITE message, which requests to set up or join a PoC session.

Step 510: A PoC server handles the role-related information, and performs session control.

Step 520: The PoC server sends a role-related charging request, namely, Apply Charge Request (ACR) [start, Users, Roles Info], to the Count Data Function (CDF) entity.

Step 530: The CDF entity performs a series of role-related operations, for example, executing the charging policy according to the role-related information, and generating PPF-CDR and PPF-CDR.

Step 540: The CDF entity returns a charging response, namely, Apply Charge Answer (ACA) [start], to the PoC server (in response to the CPF and the PPF respectively).

Step 550: After the session is set up successfully, the PoC server performs other PoC session operations. After the charging operation is completed, the CDF executes other PoC services.

The charging process for session update and session termination is similar to the charging process for session setup, and is the same as the process shown in Figure 5 except the charging request message. In a session update process, the charging request is ACR [Interim, Users, Roles info]; in a session termination process, the charging request is ACR [Stop, Users, Roles info]. The session is terminated upon completion of the charging.

In an offline charging process for session update, if multiple role operations (for example, role transfer) occur in a time interval (for example, 6 seconds) of updating the session, the charging data recorded in the ACR [Interim, Users, Roles info] request may be the last [user-role] information. However, due to role operation performed, a charging process triggered by the role operation event will occur and record the details of the role operation.

As shown in Figure 6, an online charging process includes the steps below, taking that a user role sets up or joins a PoC session as an example.

Step 600: The PoC server receives a SIP INVITE message, which requests to set up or join a PoC session.

Step 605: A PoC server handles the role-related information, and performs session control.

Step 610: In the session setup process, the PoC server receives a resource pre-allocation request, that is, an INVITE message, from the background Online Charging System (OCS), with the user role information carried in the message.

Step 615: The OCS pre-allocates resources according to the role and the requested pre-allocation quantity.

In step 615, the OCS may also need to consider the factors such as the number of invited users to decide whether to allow resource allocation and how many resources can be allocated. The decision process is omitted here, and this embodiment takes the occasion that the resources are allocated successfully as an example.

Step 620: The OCS pre-allocates the resources successfully, and returns a response about the operation result to the PoC server, with the allocated resource quantity (quota) carried in the response.

Step 625: The PoC server sets up a PoC session successfully, and sends a SIP INVITE request to other users.

Step 630: The invited user responds with a "200 OK" message, and agrees to join the session. The "200 OK" message carries the information on the role of the invited user.

Step 635: After receiving a response from the invited user, the PoC server returns a "200 OK" message to the user.

Step 640: The PPF/CPF sends a role-related charging request to the OCS.

Step 645: The OCS performs role-related charging operations, and generates the corresponding CPF-CDR and PPF-CDR.

Step 650: The session is set up successfully, and the OCS returns a charging response, namely, a Credit Control Answer (CCA) [Initial], to the PoC server.

Step 655: After the session is set up successfully, the PoC server performs other session operations.

The charging process for session update and session termination is slightly different from the charging process for session setup, as described below:
1. The charging process for session update does not need the operations of Step 600 to Step 635 in Figure 6. However, before the PoC server sends an update request (namely, Credit Control Request (CCR) [Update]), a process of updating the state of utilizing the currently allocated resources (Update Quota Control) occurs to calculate the quantity of the remaining resources. If the resources are used up, the PoC server requests the OCS to reallocate resources. No role information is required for updating resource utilization.
2. The charging for the session termination process does not require the operations of Step 600 to Step 630 in Figure 6. In the corresponding Step 635, a SIP BYE message is returned. Before the PoC server sends a charging termination request, namely, a CCR [Terminate] request, a process of updating the resource utilization state (Update Quota Control) occurs to calculate the quantity of the remaining resources. When the PoC server sends a charging termination request (namely, CCR [terminate]), the value of the remaining resources is carried in the request. The session is terminated after completion of the charging operation. Therefore, no resource pre-allocation is required in the session termination process.

In an offline charging process for session update, if multiple role operations (for example, role transfer) occur in a time interval (for example, 6 seconds) of updating the session, the charging data recorded in the CCR [Update, Users, Roles Info] request may be the last [user-role] information. However, due to role operation performed, a charging process triggered by the role operation event will occur and record the details of the role operation.

In this embodiment, the PoC user roles are not limited to regular PoC participant, PoC dispatcher, PoC moderator, and fleet member, and more roles may be added in the future. For such roles, the role-based charging implementation is the same.

The role-based PoC charging policy and solution in this embodiment provide the data that enables differentiated services for the operator, and can be implemented through small changes of the prior art. Moreover, the present invention puts forward the sources of the role, possible scenarios, and solution to such scenarios in the case of setting up or joining a PoC session, so as to solve the problems that occur in the role-based charging process.

the invention is not limited to such embodiments. It is apparent that those skilled in the art can make various modifications and variations to the present invention without departing from the scope of the present invention. The present invention is intended to cover these modifications and variations provided that they fall in the scope of protection defined by the following claims or their equivalents.

## Claims

1. A method for performing role-based charging for a Push to Talk over Cellular, PoC, service, comprising:
receiving (320, 520, 630), by a Count Data Function, CDF, or an Online Charging System, OCS, a charging request from a PoC server, wherein the charging request carries information on a user role; and
selecting(330, 340, 530, 540, 645, 650), by the CDF or OCS, a charging policy with reference to the information on a user role after receiving the charging request, performing charging according to the selected charging policy, and returning a charging response to the PoC server;
wherein the user role comprises at least one of regular PoC participant, PoC dispatcher, PoC moderator and fleet member.

2. The charging method of claim 1, wherein the charging request carries the information on a user role through a data structure that can denote multiple users and multiple roles.

3. The charging method of claim 2, wherein the data structure is composed of a information group that can denote a relationship between a user and a role.

4. The charging method according to any one of claim 1 to claim 3, wherein the CDF or OCS receives the charging request in a process of setting up, joining, updating or terminating a session.

5. The charging method according to any one of claim 1 to claim 3, wherein the OCS receives a request from the PoC server to allocate resources to the user before receiving the charging request in a process of setting up a PoC session or joining a session; and receives the charging request after the resources are allocated successfully and the PoC session is set up successfully.

6. An apparatus for performing role-based charging for a Push to Talk over Cellular, PoC, service, comprising:
a receiving module, configured to receive a charging request from a PoC server, wherein the charging request carries information on a user role; and
a charging module, configured to select a charging policy with reference to information on a user role after receiving the charging request, and perform charging according to the selected charging policy, and
a transmitting module, configured to return a charging response to the PoC server;
wherein the apparatus is a Count Data Function, CDF, or an Online Charging System, OCS;
wherein the user role comprises at least one of regular PoC participant, PoC dispatcher, PoC moderator and fleet member.

7. The apparatus of claim 6, wherein the charging request carries the information on a user role through a data structure that can denote multiple users and multiple roles.

8. The apparatus of claim 7, wherein the data structure is composed of information group that can denote a relationship between a user and a role.

9. The apparatus according to any one of claim 6 to claim 8, wherein the receiving module is configured to receive the charging request in a process of setting up, joining, updating or terminating a session.

10. A Push to Talk over Cellular, PoC, server, comprising:
a module, adapted to obtain information on a user role;
a module, adapted to send a charging request carrying the information on a user role to a Count Data Function, CDF, or an Online Charging System, OCS; and
a module, adapted to receive a charging response, wherein the charging response carries a charging result, and the charging result is derived after a charging procedure is performed according to a charging policy, and the charging policy is selected according to the information on a user role;
wherein the user role comprises at least one of regular PoC participant, PoC dispatcher, PoC moderator and fleet member.

11. The PoC server of claim 10, wherein the PoC server is adapted to obtain the information on a user role from a SIP message directly, or from an external server, or in context.

12. The PoC server of claim 10 or claim 11, wherein the PoC server is adapted to send the charging request in a process of setting up, joining, updating or terminating a session.

13. The PoC server of claim 10, wherein the PoC server is further adapted to calculate a quantity of remaining resources before sending the charging request in the a process of updating a session, and request the OCS to re-allocate resources when allocated resources are used up.

14. The PoC server of claim 10, wherein the PoC server is further adapted to use resource information before sending the charging request in a process of terminating a session, and put the resource information into the charging request.

15. A communication system, comprising the apparatus of any one of claims 6 to 9 and the PoC server of any one of claims 10 to 14.

## Patentansprüche

1. Verfahren zum Durchführen einer rollenbasierten Gebührenerfassung für einen "Push-to-Talk over Cellular"-Dienst, PoC-Dienst, das die folgenden Schritte aufweist:
Empfangen (320, 520, 630) durch eine "Count Data Function", CDF, oder ein "Online Charging System", OCS, einer Gebührenerfassungsanforderung von einem PoC-Server, wobei die Gebührenerfassungsanforderung Informationen über eine Benutzerrolle befördert; und
Auswählen (330, 340, 530, 540, 645, 650) durch die CDF oder das OCS einer Gebührenerfassungsrichtlinie unter Bezugnahme auf die Informationen über eine Benutzerrolle nach dem Empfangen der Gebührenerfassungsanforderung, Durchführen einer Gebührenerfassung gemäß der ausgewählten Gebührenerfassungsrichtlinie und Zurückschicken einer Gebührenerfassungsantwort an den PoC-Server;
wobei die Benutzerrolle einen regulären PoC-Teilnehmer und/oder einen PoC-Verteiler und/oder einen PoC-Moderator und/oder ein Flottenmitglied umfasst.

2. Gebührenerfassungsverfahren nach Anspruch 1, wobei die Gebührenerfassungsanforderung die Informationen über eine Benutzerrolle durch eine Datenstruktur befördert, die mehrere Benutzer und mehrere Rollen kennzeichnen kann.

3. Gebührenerfassungsverfahren nach Anspruch 2, wobei die Datenstruktur aus einer Informationsgruppe besteht, die eine Beziehung zwischen einem Benutzer und einer Rolle kennzeichnen kann.

4. Gebührenerfassungsverfahren nach einem der Ansprüche 1 bis 3, wobei die CDF oder das OCS die Gebührenerfassungsanforderung in einem Prozess des Aufbauens, Beitretens, Aktualisierens oder Beendens einer Sitzung empfängt.

5. Gebührenerfassungsverfahren nach einem der Ansprüche 1 bis 3, wobei das OCS eine Anforderung vom PoC-Server, dem Benutzer Ressourcen zuzuweisen, vor dem Empfangen der Gebührenerfassungsanforderung in einem Prozess des Aufbauens einer PoC-Sitzung oder des Beitretens zu einer Sitzung empfängt; und die Gebührenerfassungsanforderung empfängt, nachdem die Ressourcen erfolgreich zugewiesen worden sind und die PoC-Sitzung erfolgreich aufgebaut worden ist.

6. Vorrichtung zur Durchführung einer rollenbasierten Gebührenerfassung für einen "Push-to-Talk over Cellular"-Dienst, PoC-Dienst, die Folgendes aufweist:
ein Empfangsmodul, das konfiguriert ist, eine Gebührenerfassungsanforderung von einem PoC-Server zu empfangen, wobei die Gebührenerfassungsanforderung Informationen über eine Benutzerrolle befördert; und
ein Gebührenerfassungsmodul, das konfiguriert ist, eine Gebührenerfassungsrichtlinie unter Bezugnahme auf Informationen über eine Benutzerrolle nach dem Empfangen der Gebührenerfassungsanforderung auszuwählen und eine Gebührenerfassung gemäß der ausgewählten Gebührenerfassungsrichtlinie durchzuführen, und
ein Übertragungsmodul, das konfiguriert ist, eine Gebührenerfassungsantwort an den PoC-Server zurückzuschicken;
wobei die Vorrichtung eine "Count Data Function", CDF, oder ein "Online Charging System", OCS, ist;
wobei die Benutzerrolle einen regulären PoC-Teilnehmer und/oder einen PoC-Verteiler und/oder einen PoC-Moderator und/oder ein Flottenmitglied umfasst.

7. Vorrichtung nach Anspruch 6, wobei die Gebührenerfassungsanforderung die Informationen über eine Benutzerrolle durch eine Datenstruktur befördert, die mehrere Benutzer und mehrere Rollen kennzeichnen kann.

8. Vorrichtung nach Anspruch 7, wobei die Datenstruktur aus einer Informationsgruppe besteht, die eine Beziehung zwischen einem Benutzer und einer Rolle kennzeichnen kann.

9. Vorrichtung nach einem der Ansprüche 6 bis 8, wobei das Empfangsmodul konfiguriert ist, die Gebührenerfassungsanforderung in einem Prozess des Aufbauens, Beitretens, Aktualisierens oder des Beendens einer Sitzung zu empfangen.

10. "Push-to-Talk over Cellular"-Server, PoC-Server, der Folgendes aufweist:
ein Modul, das eingerichtet ist, sich Informationen über eine Benutzerrolle zu beschaffen;
ein Modul, das eingerichtet ist, eine Gebührenerfassungsanforderung, die die Informationen über eine Benutzerrolle befördert, an eine "Count Data Function", CDF,
oder ein "Online Charging System", OCS, zu senden, und
ein Modul, das eingerichtet ist, eine Gebührenerfassungsantwort zu empfangen, wobei die Gebührenerfassungsantwort ein Gebührenerfassungsresultat befördert, und
das Gebührenerfassungsresultat abgeleitet wird, nachdem eine Gebührenerfassungsprozedur gemäß einer Gebührenerfassungsrichtlinie durchgeführt worden ist, und die Gebührenerfassungsrichtlinie gemäß den Informationen über eine Benutzerrolle ausgewählt worden ist;
wobei die Benutzerrolle einen regulären PoC-Teilnehmer und/oder einen PoC-Verteiler und/oder einen PoC-Moderator und/oder ein Flottenmitglied aufweist.

11. PoC-Server nach Anspruch 10, wobei der PoC-Server eingerichtet ist, die Informationen über eine Benutzerrolle direkt aus einer SIP-Nachricht oder von einem externen Server oder im Kontext zu beschaffen.

12. PoC-Server nach Anspruch 10 oder 11, wobei der PoC-Server eingerichtet ist, die Gebührenerfassungsanforderung in einem Prozess des Aufbauens, Beitretens, Aktualisierens oder Beendens einer Sitzung zu empfangen.

13. PoC-Server nach Anspruch 10, wobei der PoC-Server ferner eingerichtet ist, eine Menge der restlichen Ressourcen vor dem Senden der Gebührenerfassungsanforderung in einem Prozess des Aktualisierens einer Sitzung zu berechnen, und das OCS aufzufordern, erneut Ressourcen zuzuweisen, wenn die zugewiesenen Ressourcen aufgebraucht sind.

14. PoC-Server nach Anspruch 10, wobei der PoC-Server ferner eingerichtet ist, Ressourceninformationen vor dem Senden der Gebührenerfassungsanforderung in einem Prozess des Beendens einer Sitzung zu verwenden und die Ressourceninformationen in die Gebührenerfassungsanforderung zu setzen.

15. Kommunikationssystem, das die Vorrichtung nach einem der Ansprüche 6 bis 9 und den PoC-Server nach einem der Ansprüche 10 bis 14 aufweist.

## Revendications

1. Procédé destiné à mettre en oeuvre une facturation à base de rôle pour un service de Messagerie Instantanée sur Réseau Cellulaire, PoC (Push to Talk over Cellular), comprenant :
la réception (320, 520, 630), par une Fonction de Données de Comptes, CDF (Count Data Function), ou par un Système de Facturation en Ligne, OCS (Online Charging System), d'une demande de facturation en provenance d'un serveur PoC, la demande de facturation acheminant des informations concernant un rôle de l'utilisateur ; et
la sélection (330, 340, 530, 540, 645, 650), par la CDF ou l'OCS, d'une politique de facturation faisant référence aux informations concernant un rôle de l'utilisateur après réception de la demande de facturation, la mise en oeuvre de la facturation conformément à la politique de facturation sélectionnée, et le renvoi d'une réponse de facturation au serveur PoC ;
dans lequel le rôle de l'utilisateur comprend au moins l'un d'un participant PoC régulier, d'un distributeur PoC, d'un modérateur PoC et d'un membre d'un parc.

2. Procédé de facturation selon la revendication 1, dans lequel la demande de facturation achemine les informations concernant un rôle de l'utilisateur par l'intermédiaire d'une structure de données pouvant désigner de multiples utilisateurs et de multiples rôles.

3. Procédé de facturation selon la revendication 2, dans lequel la structure de données est composée d'un groupe d'informations pouvant désigner une relation entre un utilisateur et un rôle.

4. Procédé de facturation selon l'une quelconque des revendications 1 à 3, dans lequel la CDF ou l'OCS reçoit la demande de facturation lors d'un processus d'établissement, d'ouverture, de mise à jour ou de terminaison d'une session.

5. Procédé de facturation selon l'une quelconque des revendications 1 à 3, dans lequel l'OCS reçoit une demande du serveur PoC pour allouer des ressources à l'utilisateur avant réception de la demande de facturation lors d'un processus d'établissement d'une session PoC ou d'ouverture d'une session ; et reçoit la demande de facturation après réussite de l'allocation des ressources et réussite de l'établissement de la session PoC.

6. Appareil destiné à mettre en oeuvre une facturation à base de rôle pour un service de Messagerie Instantanée sur Réseau Cellulaire, PoC, comprenant :
un module de réception, configuré pour recevoir une demande de facturation en provenance d'un serveur PoC, dans lequel la demande de facturation achemine des informations concernant un rôle de l'utilisateur ; et
un module de facturation, configuré pour sélectionner une politique de facturation faisant référence à des informations concernant un rôle de l'utilisateur après réception de la demande de facturation, et pour mettre en oeuvre la facturation conformément à la politique de facturation sélectionnée, et
un module de transmission, configuré pour renvoyer une réponse de facturation au serveur PoC ;
dans lequel l'appareil est une Fonction de Données de Comptes (CDF), ou un Système de Facturation en Ligne, OCS ;
dans lequel le rôle de l'utilisateur comprend au moins l'un d'un participant PoC régulier, d'un distributeur PoC, d'un modérateur PoC et d'un membre d'un parc.

7. Appareil selon la revendication 6, dans lequel la demande de facturation achemine les informations concernant un rôle de l'utilisateur par l'intermédiaire d'une structure de données pouvant désigner de multiples utilisateurs et de multiples rôles.

8. Appareil selon la revendication 7, dans lequel la structure de données est composée d'un groupe d'informations pouvant désigner une relation entre un utilisateur et un rôle.

9. Appareil selon l'une quelconque des revendications 6 à 8, dans lequel le module de réception est configuré pour recevoir la demande de facturation lors d'un processus d'établissement, d'ouverture, de mise à jour ou de terminaison d'une session.

10. Serveur de Messagerie Instantanée sur Réseau Cellulaire, PoC, comprenant :
un module, apte à obtenir des informations concernant un rôle de l'utilisateur ;
un module, apte à envoyer une demande de facturation acheminant les informations concernant un rôle de l'utilisateur à une Fonction de Données de Comptes, CDF, ou à un Système de Facturation en Ligne, OCS ; et
un module, apte à recevoir une réponse de facturation, dans lequel la réponse de facturation achemine un résultat de facturation, et le résultat de facturation est déduit après qu'une procédure de facturation a été mise en oeuvre conformément à une politique de facturation, et la politique de facturation est sélectionnée conformément aux informations concernant un rôle de l'utilisateur ;
dans lequel le rôle de l'utilisateur comprend au moins l'un d'un participant PoC régulier, d'un distributeur PoC, d'un modérateur PoC et d'un membre d'un parc.

11. Serveur PoC selon la revendication 10, dans lequel le serveur PoC est apte à obtenir des informations concernant un rôle de l'utilisateur directement en provenance d'un message SIP, ou d'un serveur externe, ou en contexte.

12. Serveur PoC selon la revendication 10 ou 11, dans lequel le serveur PoC est apte à envoyer la demande de facturation lors d'un processus d'établissement, d'ouverture, de mise à jour ou de terminaison d'une session.

13. Serveur PoC selon la revendication 10, dans lequel le serveur PoC est en outre apte à calculer une quantité de ressources restantes avant d'envoyer la demande de facturation lors d'un processus de mise à jour d'une session, et à demander à l'OCS de réallouer des ressources lorsque les ressources allouées sont consommées.

14. Serveur PoC selon la revendication 10, dans lequel le serveur PoC est en outre apte à utiliser des informations de ressources avant d'envoyer la demande de facturation lors d'un processus de terminaison d'une session, et à introduire les informations de ressources dans la demande de facturation.

15. Système de communication, comprenant l'appareil selon l'une quelconque des revendications 6 à 9 et le serveur PoC selon l'une quelconque des revendications 10 à 14.
